# EUROPEAN PATENT APPLICATION

(11) **EP 4 527 791 A1**
(43) Date of publication of application: **26.03.2025**
(21) Application number: 23020442.2
(22) Date of filing: 22.09.2023
(51) Int. Cl.: C01B 17/04, B01D 53/52

(54) **METHOD AND APPARATUS FOR TREATING A SOUR GAS**

(71) Applicant: Linde GmbH, 82049 Pullach (DE); Selas-Linde GmbH, 82049 Höllriegelskreuth (DE)
(72) Inventor: Hibbit, Ian, 82049 Pullach (DE); Murer, Martin, 82049 Pullach (DE)
(74) Representative: Lu, Jing

(57) **Abstract**

A method for treating a sour gas (1) is proposed, wherein the sour gas (1) is introduced into a furnace (10) comprising a first furnace region (11), a second furnace region (12), a combustion arrangement (13) at a first terminal zone (111) of the first furnace region (11), a choking ring (14) arranged between a second terminal zone (112) of the first furnace region (11) and a first terminal zone (121) of the second furnace region (12), and a furnace outlet (15) arranged at a second terminal zone (121) of the second furnace region (12), wherein at least a first part (2) of the sour gas (1) is supplied to the combustion arrangement (13) and at least one injection gas (3, 7, 8)is supplied to the first (11) and/or second (12) furnace region. It is proposed that the at least one injection gas or a part thereof is injected into the first (11) and/or second (12) furnace region in at least one injection direction comprising a directional component which is opposite or anti-parallel with regard to a direction parallel to a longitudinal axis (105) of the furnace (10) from the combustion arrangement (13) towards the furnace outlet (15). A corresponding apparatus (100, 110) is also proposed according to the present invention.

## Description

The invention relates to a method and an apparatus for treating a sour gas.

### Background

Sour or acid gases containing hydrogen sulphide and optionally other components like carbonyl sulphide and carbon dioxide are produced in the so-called "sweetening" of natural gas, for example. However, the term "sour gas" is used herein to describe a gas mixture containing the components mentioned, irrespectively of the source thereof. A hydrogen sulphide content in a sour gas may be at least 10% by mass, volume or on a molar basis. Sour gases may particularly be formed in an amine scrubbing unit or in a water stripper, as generally known in the art. A sour gas may be enriched by an addition of one or more amines, in which case the term "amine sour gas" may be used.

One possibility of treating a sour gas is the recovery of sulphur using the Claus process in a so-called sulphur recovery unit (SRU). In the Claus process, a part of the hydrogen sulphide in the sour gas is oxidized in a reaction or Claus furnace to form sulphur dioxide. The sulphur dioxide is further reacted with residual hydrogen sulphide to elementary sulphur. Gas streams may enter the reaction furnace of a sulphur recovery unit through various inlets. The main inlet is the burner, where the sour gas is injected along with an oxidant which can be air, oxygen enriched air or pure oxygen. Typically, an end fired Claus furnace is a substantially tubular furnace with the burner being arranged to produce one or more substantially axially oriented flames within a central axial region of the furnace. Alternatively, tangentially fired Claus furnaces exist where the furnace is a substantially tubular furnace with the burner being arranged to produce one or more substantially tangentially oriented flames.

To be able to raise the temperature in a first zone of the reaction furnace, part of a sour gas can be bypassed around the first region of a Claus furnace and be injected in a second region of the furnace. This is either done by a tangential injection directly in the second region or by a radial injection through or behind a choke ring separating the first and second region, such as shown in WO 2005/007570 A2. Proper mixing of gases in the Claus furnace is important for good sulphur conversion.

There is a desire for improvement in such methods, particularly relating to an improved mixing of by-passed gas streams in a Claus furnace and relating to a reduced emission of sulfur containing gases from a Claus furnace into the atmosphere.

### Summary

Against this background, a method and an apparatus for treating a sour gas are proposed. Embodiments are the subject matter of the dependent claims and of the description that follows hereinbelow.

Herein, a method for treating a sour gas is proposed, wherein the sour gas is introduced into a furnace comprising a first furnace region, a second furnace region, a combustion arrangement (also referred to as "burner" hereinbelow) at a first terminal zone of the first furnace region, a choking or choke ring arranged between a second terminal zone of the first furnace region and a first terminal zone of the second furnace region, and a furnace outlet arranged at a second terminal zone of the second furnace region. The first furnace region is also called "first reaction zone" and the second furnace region "second reaction zone" hereinbelow.

A first part of the sour gas is supplied, according to some embodiments proposed herein, to the combustion arrangement and a second part of the sour gas is supplied to the second furnace region between the first terminal zone and the second terminal zone thereof using a bypass gas feeding arrangement. According to these embodiments, the second part of the sour gas or a part thereof is injected into the second furnace region in injection directions comprising a directional component directed towards the choking ring.

In some embodiments, a method of treating a sour gas is proposed, using a tubular furnace having an axially oriented burner and a choke ring extending radially from an outer wall into an inner volume of the furnace, the choke ring defining a first axial reaction zone and a second axial reaction zone of the furnace, wherein the second axial reaction zone is arranged downstream from the first axial reaction zone, the method comprising operating the burner with a firing gas mixture comprising a sour gas component and an oxidant, and injecting at least one recycling gas recovered from upstream and/or downstream the furnace into the first reaction zone in an injection direction having a directional component, which is opposite or anti-parallel with regard to the axial orientation of the burner, starting from one or more injection positions situated in a radial region corresponding to a radial region covered by the choke ring. The oxidant may particularly comprise oxygen and may be air or oxygen enriched air, for example. For example, a pit vent gas withdrawn from a liquid sulphur storage pit, i.e. from downstream the furnace, may be used as the first recycling gas and/or a slag tank vent gas (i.e. withdrawn from a slag tank upstream the furnace, which may be used as a feedstock container for the furnace and/or in a process independent of the furnace) may be used as the second recycling gas.

As mentioned, a part of a sour gas may be tangentially injected in the second region or by a radial injection through or behind a choke ring separating the first and second region of a furnace used in a conventional Claus process. Proper mixing of the added gas with the hot gases in the furnace is important for good sulphur conversion. Axially fired jet or multi jet burners efficiently mix the different gas streams by establishing recirculation zones at the outlet of the burner and at the outlet of the choke ring into the second furnace region.

As recognized in connection with the present invention, however, such recirculation zones are disturbed by tangential injections to the point where they are not even established. This severely decreases the mixing performance of the burner, which reduces the sulphur recovery efficiency. In contrast, an injection as proposed herein supports or enhances the recirculation in the recirculation zones.

The present invention and embodiments thereof further improve the mixing in the reaction furnace of a sulphur recovery unit and assist the mixing of the burner at high bypass ratios. Better mixing leads to more homogenous temperature and species distribution which benefits the Claus reaction of the gas bypassing the first reaction zone in these embodiments. More residence time at higher temperature for all gas streams is important for good performance. More homogenous temperature distribution leads also to more representative values for the installed temperature measurements, which implies better control of the plant's operation.

The term "directional component", as used herein, is used to describe any directions which may be geometrically constructed from different directional vectors, wherein any of these directional vectors may face towards the choking ring, and the combustion arrangement arranged at the first terminal zone of the first furnace region.

In embodiments, a direction parallel to a longitudinal axis of the furnace from the combustion arrangement towards the furnace outlet (i.e. the axial orientation of the burner) on the one hand and the injection directions on the other hand may enclose an obtuse angle of up to 180°. The obtuse angle may be at least 100°, such as 110°, 120°, 130°, 140°, 150°, 160° or 170°. Particularly very low angles, i.e. angles close to 180°, may serve to assist the recirculation zones created by the flow issuing from the burner into the first reaction zone and the flow entering the second furnace region, respectively.

That is, embodiments of the present invention include to orient the bypassed (amine) acid gas injections in such a way that they assist the recirculation zones created by the flow entering the second combustion chamber.

In at least one embodiment, the injection direction comprises none, one or both of a tangential directional component and a radial directional component with respect to the axial orientation of the burner. Thus, the injection direction may, for example, be chosen to substantially correspond to a local direction of a recirculating gas stream at the injection position in order to optimize mixing performance.

In at least one embodiment, a length of a vector representing a radial directional component of the injection direction amounts to less than 20%, less than 10% or less than 5% of a length of a vector representing the overall injection direction.

The amine acid gas bypass stream can be injected with a very low angle or axially using special refractory tiles in the middle or rear part of the second reaction zone facing toward the main burner, i.e., in embodiments proposed herein, the sour gas or the part thereof which is injected into the second furnace region in the injection directions is injected using one or more refractory tiles arranged in the second furnace region or the second terminal zone thereof. These refractory tiles may be part of the bypass gas feeding arrangement proposed according to embodiments.

Depending on the distance from the choke ring and diameter of the injection, the velocity of the injected gas can be in the same range as the (amine) acid gas injected at the main burner. More generally, a first gas recirculation zone may be generated in the first furnace region and a second gas recirculation zone may be generated in the second furnace region, wherein the second part of the sour gas or the part thereof which is injected into the second furnace region in the injection directions may be injected into the second furnace region to support, i.e. enhance, maintain or establish, a gas recirculation in the second gas recirculation zone. Particularly referring to injections of the at least one recycling gas into the first reaction zone, in at least one embodiment, an injection velocity of the at least one recycling gas is adjusted according to an axial position of the at least one injection position and/or according to the injection direction, particularly wherein an axial position closer to the burner and/or a greater radial direction component results in a lower injection velocity than an axial position further distanced from the burner and/or a smaller radial direction component, respectively. This ensures or supports stable operating conditions for the burner.

For such support, as mentioned, the injection may be performed in an injection speed adapted to a motion speed of recirculated gas in the second gas recirculation zone, wherein "adapted" particularly may describe speeds differing by no more than 20%, no more than 10%, or no more than 5%. On the other hand, in at least one embodiment, an injection velocity of the at least one recycling gas into the first reaction zone differs by at least 5%, 10%, 15% or more than 20% from an injection velocity of the firing gas mixture. This aids proper mixing and leads to high entrainment rates. In some cases, corresponding to such or other embodiments, a higher velocity (difference) lead to better entrainment and mixing. Using these recycled gas streams to add momentum for better mixing is the core of the invention. In some cases, corresponding to this or other embodiments, as the recycling gas is injected in an opposite direction to the main gas stream, it brake the main stream.

In at least one embodiment, the one or more injection position (for the bypassed or second part of the sour gas and/or the at least one recycling gas) comprise 2, 3, 4, 5, 6, 7, 8, 9, 10 or up to 50 injection positions, particularly wherein the injection positions are spaced from one another in a circumferential direction and or in an axial direction and/or in a radial direction with respect to the furnace. This provides for a more evenly distributed overall composition of the gas mixture within the furnace. In principle, any number of injections can be foreseen in embodiments using a number of injection devices, wherein the number of injection devices may be in the range from 1, 2 or 3 to 8, 10 or 20 or a higher number, and/or the injection devices may particularly be distributed over the circumference of a wall of the second furnace region. Particularly, for each injection position a separate injection device may be provided or each injection device may serve one or more injection positions.

In at least one embodiment, a first of the at least one recycling gas is routed to a first injection position and a second of the at least one recycling gas is routed to a second injection position, wherein the first recycling gas has a higher oxygen content than the second recycling gas and the first injection position is further distanced from the outer wall of the furnace than the second injection position. Since the second gas (e.g. slag tank vent gas) contains no (or at least only a small amount of) oxygen, it can be injected closer to the refractory wall of the furnace without risking damages to the refractory lining or overheating of structures behind the refractory. Depending on the oxygen content of the first recycling gas (e.g. pit vent gas) the distance from the injection position to the refractory wall should be increased, to keep high temperature gas away from the refractory.

According to embodiments of the present invention, the sour gas may at least in part be formed using an amine scrubbing unit in a gas treatment process, as already explained at the outset, and as generally known in the art. Further sour gas, such as water scrubber sour gas, may be supplied to the combustion arrangement.

The gas treatment process may be or may include a natural gas sweetening process, and/or the sour gas may contain from 20 to 80%, 90% or 100% by volume hydrogen sulphide. The present invention and embodiments thereof may be used in all other scenarios, however, and the underlying ideas may be transferred to other round reaction furnaces with jet burners and additional gas injections, such as the case for so-called hot oxygen burners (HOB). Generally, the combustion arrangement may, in embodiments proposed herein, be operated using air, oxygen or oxygen-enriched air. In some embodiments, the method is used, however, in connection with a Claus process, i.e. the method includes that the furnace is used to partly oxidize hydrogen sulphide in the first furnace region to form sulphur dioxide, and at least a part of said sulphur dioxide and hydrogen sulphide not oxidized in the first furnace region may be reacted to form elementary sulphur in such embodiments.

An apparatus according to the invention is configured to perform a method according to any of the embodiments as described herein and therefore profits from the same advantages in a corresponding manner.

Particularly, an apparatus for treating a sour gas, including a furnace comprising a first furnace region, a second furnace region, a combustion arrangement at a first terminal zone of the first furnace region, a choking ring arranged between a second terminal zone of the first furnace region and a first terminal zone of the second furnace region, and a furnace outlet arranged at a second terminal zone of the second furnace region is also an embodiment of the present invention. The apparatus according to such an embodiment is adapted to introduce the sour gas into the furnace and the apparatus is adapted to supply a first part of the sour gas to the combustion arrangement and to supply a second part of the sour gas to the second furnace region between the first terminal zone and the second terminal zone thereof using a bypass gas feeding arrangement. An apparatus proposed herein is adapted to inject the second part of the sour gas or a part thereof into the second furnace region in injection directions comprising a directional component towards the choking ring.

As to further features and advantages of an inventive apparatus and its possible embodiments, particular reference is made to the description of the method according to the present invention and its embodiments as described before. As mentioned, an apparatus according to the present invention is particularly adapted to perform a corresponding method or an embodiment thereof.

The present invention will further be described with reference to the appended drawing illustrating embodiments of the present invention.

### Brief description of the drawings

Figure 1 schematically illustrates an apparatus for treating a sour gas.
Figure 2 schematically illustrates an apparatus according to an embodiment.
Figure 3 schematically depicts a further embodiment of the invention.

### Detailed description

In the Figures, elements of identical, essentially identical, functionally comparable, or technically compatible function and/or purpose and/or construction may be identified with identical reference numerals, and repeated explanations may be omitted for reasons of conciseness. Explanations herein relating to devices, apparatus, arrangements, systems, etc., according to embodiments of the present invention likewise may apply to methods, processes, procedures, etc. according to embodiments of the present invention and vice versa.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future, particularly when encompassed by the scope of the independent claims.

Improved Claus technology is based on using high purity oxygen in a sulphur recovery unit. The sour gas cannot normally be burnt directly with the highly pure oxygen as the combustion temperature is too high. For high strength sour gas, high temperatures result in the reaction furnace, which can be safely moderated through the use of the SURE (Sulphur Recovery) Double Combustion, which is for instance described in US 5,294,428 A, EP 1 315 548 A1, and EP 1 644 286 A1. For low strength sour gas fired with high purity oxygen, a single reaction furnace may be adequate. For both options a so-called SURE burner may be used, which is for instance described in EP 974 552 A1, EP 1 240 460 A1, and EP 1 483 199 A1, for the injection of the acid gas and oxygen into the reaction furnace. Embodiments of the present invention as described before and hereinbelow may be used with all kinds of reactors, furnaces and burners and the present invention is not limited accordingly.

A sour gas used in embodiments proposed herein particularly comprises hydrogen sulphide and carbon dioxide. The sour gas treatment proposed in embodiments herein includes oxidation of the sour gas, wherein a part of the hydrogen sulphide is oxidized to form sulphur dioxide and water, the resulting sulphur dioxide is reacted with the residual hydrogen sulphide to elementary sulphur, and the elementary sulphur is removed. Sour gas treatment in the understanding used herein includes recovering sulphur and carbon dioxide from the sour gas using a furnace for oxidation of hydrogen sulphide to sulphur dioxide and water, and further includes using a catalytic converter connected to the furnace for formation of elementary sulphur from sulphur dioxide and hydrogen sulphide. Means for extracting elementary sulphur may be used in embodiments, and a hydrogenation reactor may be used which is connected to the catalytic converter for hydrogenation of the sour gas. Means for providing hydrogen used for the hydrogenation connected to the hydrogenation reactor may also be used, as well as a water removal unit for the removal of water connected to the hydrogenation reactor.

Thus, embodiments for recovering sulphur and carbon dioxide from a sour gas containing hydrogen sulphide and carbon dioxide may comprise at least an oxidation of the sour gas, wherein a part of the hydrogen sulphide may be oxidized to sulphur dioxide and water, the resulting sulphur dioxide may be reacted of with the residual hydrogen sulphide to elementary sulphur, and the elementary sulphur may be removed. This is disclosed for instance in US 5,294,428 A.

Currently, as disclosed and further discussed in EP 2 572 774 A1 by the present applicant, in many parts of the world there are significant quantities of sour natural gases being extracted from gas fields. Hydrogen sulphide present in the natural gas may be removed in gas processing units through typically an amine unit. The sour gas product from the gas processing plant typically contains 20-80% by volume hydrogen sulphide and some carbon dioxide, carbonyl sulphide, and carbon disulphide. Hydrocarbons such as methane or BTX (benzene, toluene, xylene) may also be present in sour gases used according to embodiments proposed herein. For further details, specific reference is made to EP 2 572 774 A1.

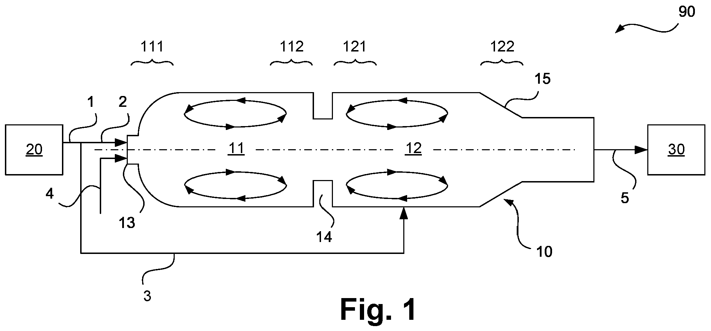

In Figure 1, an apparatus for treating a sour gas not forming part of the present invention is shown and generally indicated with reference numeral 90.

The sour gas, which is indicated 1, or any combination of different sour gas and amine streams, is withdrawn from an upstream unit 20 in which it may be formed, for example a natural gas sweetening plant comprising an amine and a water scrubber. The apparatus 90 includes a furnace 10 comprising a first furnace region 11 (also referred to as first reaction zone 11), a second furnace region 12 (also referred to as second reaction zone 12), a combustion arrangement 13 (also referred to as burner 13) at a first terminal zone 111 of the first furnace region 11, particularly comprising an axial burner, a choking ring or choke ring 14 arranged between a second terminal zone 112 of the first furnace region 11 and a first terminal zone 121 of the second furnace region 12, and a furnace outlet 15 arranged at a second terminal zone 121 of the second furnace region 12. A longitudinal axis of the furnace 10 is indicated as a dash-dotted line.

As indicated by circulating arrows, a first gas recirculation zone is generated in the first furnace region 11 and a second gas recirculation zone is generated in the second furnace region 12. A first part 2 of the sour gas 1 is supplied to the combustion arrangement 13 together with an oxydator stream 4 such as air, oxygen, and oxygen-enriched air. A second part 3 of the sour gas is supplied to the second furnace region 12 between the first terminal zone 121 and the second terminal zone (122) thereof using a bypass gas feeding arrangement not explicitly shown in Figure 1. As mentioned above, in conventional arrangements such as the apparatus shown in Figure 1, tangential injection may result in a disturbance of the gas recirculation zone in the second furnace region 12.

From the furnace outlet 15 of the furnace 10, a process gas stream 5 is withdrawn and passed to a downstream unit 30, such as a catalytic unit for recovery of elementary sulphur and a so-called tail gas treatment unit (TGTU).

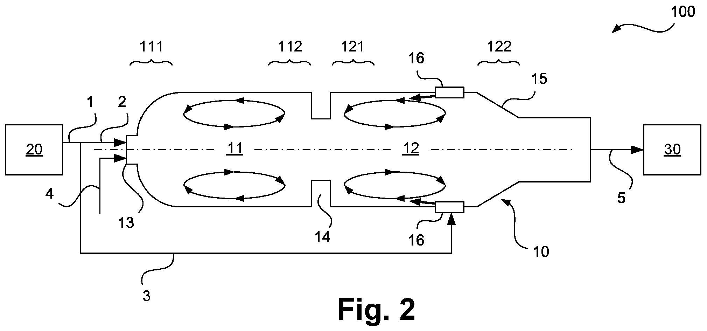

In Figure 2, an apparatus for treating a sour gas according to an embodiment of the present invention is shown and generally indicated with reference numeral 100.

In contrast to apparatus 90 shown in Figure 1, the second part 3 of the sour gas or a part thereof is injected into the second furnace region 12 in injection directions comprising a directional component directed towards the choking ring 14. A bypass gas feeding arrangement applied for this purpose is indicated 16, and the injection directions are indicated by solid arrows extending therefrom into the second furnace region 12 where the recirculation zones are formed.

More specifically, a direction parallel to the longitudinal axis of the furnace 10 from the combustion arrangement 13 towards the furnace outlet 15, and the injection direction, indicated by a solid straight arrow, enclose an obtuse angle as explained above. The sour gas or the part thereof which is injected into the second furnace region 12 in the injection direction is injected using one or more refractory tiles arranged in the second furnace region 12 or the second terminal zone 122 thereof. For further details of corresponding apparatus 100, reference is made to the explanations above.

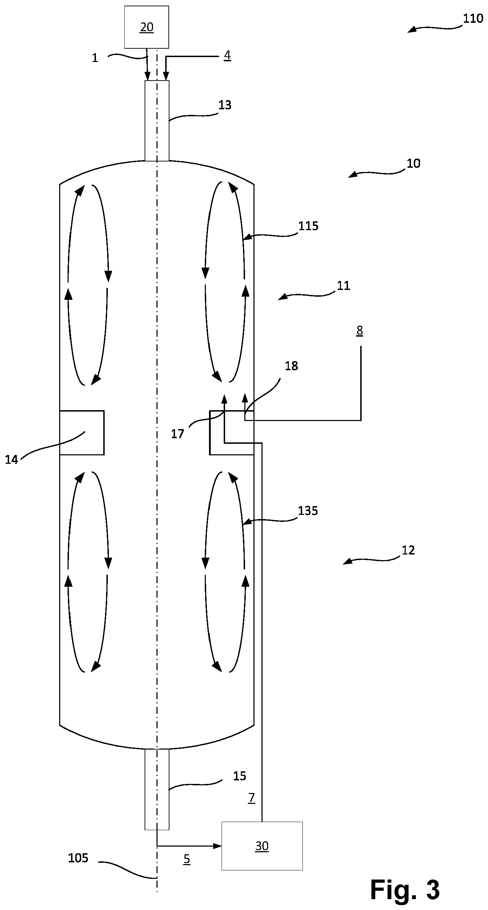

In Fig. 3, a further embodiment of the invention is schematically depicted and collectively referred to as embodiment 110.

Furnace 10, in the example shown, comprises a main inlet or burner 13 positioned in axial alignment with a radially central axis 105 of the furnace 10. In operation, the burner 13 is fired with firing gas 1 comprising a sour gas component, e.g. hydrogen sulfide, and an oxidant 4 such as air or oxygen enriched air. The oxidant 4 may also be substantially pure oxygen, for example. A flame produced by the burner 13 extends substantially in the axial direction 105 and produces sulfur dioxide by reacting the sour gas component 1 with the oxidant 4.

The furnace 10 is provided with a choke ring 14 defining a first reaction zone 11 upstream of the choke ring 14 and a second reaction zone 12 downstream of the choke ring 14. The choke ring 14 extends from an outer wall of the furnace 10 into an inner volume of the furnace 10 in a substantially radial direction. This induces turbulences in the gas stream produced by the firing of the burner 13, leading to recirculation streams upstream (115) and downstream (135) of the choke ring 14. These recirculation streams 115, 135 aid mixing the different gas species present within the furnace 10 with one another and, therefore, contribute to the overall reaction yield. Particularly, the proper mixing in the first reaction zone 11 results in a high yield of sulfur dioxide while proper mixing in the second zone 12 increases the yield in sulfur (from a reaction of the sulfur dioxide produced in the first reaction zone 11 with additional hydrogen sulphide injected into the second reaction zone 12, which is not explicitly shown in Fig. 3). Insofar, the apparatus 110 substantially corresponds to the apparatus 90, 100 discussed above in relation to Figs. 1 and 2.

In contrast to thoses embodiments, in the first reaction zone 11 of furnace 10 of the apparatus 110, at least one recycling gas (here a first 7 and a second 8 recycling gas) is injected in a direction having a directional component which is opposite or anti-parallel with regard to the axial orientation of the burner 13 (i.e. the injection direction has a directional component pointing substantially towards the burner 13). Here, the first recycling gas 7 may be a gas stream provided as a pit vent gas (Pit vent gas may be a gas removed from a liquid sulphur storage pit, i.e. from downstream the furnace 10, to prevent the accumulation of degassed H2S from the liquid sulphur) and may comprise a sour gas component such as hydrogen sulfide and/or sulfur dioxide and a substantial amount of oxygen (e.g. stemming from air used to withdraw the pit vent gas). The second recycling gas 8 may be a gas stream provided as a slag tank vent gas (The slag tank vent gas is removed from a slag storage tank. Typically, the slag is a product from an upstream gasification process using liquid or solid feed.) and may comprise a sour gas component such as hydrogen sulfide and/or sulfur dioxide and a substantially inert gas such as nitrogen or steam (e.g. stemming from a respective ejector used to withdraw the slag tank vent gas from the slag tank). The first recycling gas 7 may be withdrawn from a respective downstream unit 30, for example a pit storing the (liquid) sulfur produced in the furnace 10.

In the embodiment shown, the first recycling gas 7, having a higher oxygen content than the second recycling gas 8, is injected at a first injection position 17 being at a greater distance from the outer wall of the furnace 10 in comparison to a second injection position 18 at which the second recycling gas 8 is injected into the first reaction zone 11. In the example shown, the first and second injection positions 17, 18 are both situated in a radial region corresponding to the radial region covered by the choke ring 14. Particularly, the injection positions 17, 18 are situated at a boundary of the first reaction zone 11 with the choke ring 14 (or, in other words, at an upstream wall of the choke ring 14).

The injection of the first 7 and second 8 recycling gases into the first reaction zone 11 enhances the mixing performance provided by the recirculation streams 115. Particularly, the injection may be effected with a higher injection velocity as compared to an injection velocity of the burner 13. For example, the injection velocity of the first and second recycling gases 7, 8 may differ by more than 5%, 10% or by more 20% from an injection velocity of the firing gas 1. Particularly, the injection velocity may be adjusted depending on a radial directional component of the injection direction and may, for example, be higher when the radial directional component is relatively small and may be lower, when the radial directional component is relatively great.

In one example, a length of a vector representing the radial directional component may amount to less than 20%, less than 10% or less than 5% of a length of a vector representing the overall injection direction.

The apparatus 110 can also be combined with the apparatus 100 as described above such that injections in both reaction zones 11, 12 are effected in a substantially or at least partially anti-parallel direction with respect to the burner orientation.

## Claims

1. A method for treating a sour gas (1), wherein the sour gas (1) is introduced into a furnace (10) comprising a first furnace region (11), a second furnace region (12), a combustion arrangement (13) at a first terminal zone (111) of the first furnace region (11), a choking ring (14) arranged between a second terminal zone (112) of the first furnace region (11) and a first terminal zone (121) of the second furnace region (12), and a furnace outlet (15) arranged at a second terminal zone (121) of the second furnace region (12), wherein at least a first part (2) of the sour gas (1) is supplied to the combustion arrangement (13) and at least one injection gas (3, 7, 8) is injected into the first (11) and/or the second (12) furnace region,
**characterized in that** the at least one injection gas or a part thereof is injected into the first (11) and/or second (12) furnace region in at least one injection direction comprising a directional component which is opposite or anti-parallel with regard to a direction parallel to a longitudinal axis (105) of the furnace (10) from the combustion arrangement (13) towards the furnace outlet (15).

2. The method according to claim 1, wherein a direction parallel to the longitudinal axis (105) of the furnace (10) and the at least one injection direction enclose an obtuse angle of up to 180°.

3. The method according to claim 2, wherein the obtuse angle is at least 100°.

4. Method according any of the preceding claims, wherein the at least one injection direction comprises none, one or both of a tangential directional component and a radial directional component with respect to the longitudinal axis (105) of the furnace (10).

5. The method according to any of the preceding claims, wherein the at least one injection gas (3, 7, 8) comprises a second part (3) of the sour gas being injected into the second furnace region (12) between the first terminal zone (121) and the second terminal zone (122) thereof using a bypass gas feeding arrangement (16).

6. The method according to claim 5, wherein the sour gas or the part thereof which is injected into the second furnace region (12) in the injection directions is injected using one or more refractory tiles arranged in the second furnace region (12) or the second terminal zone (122) thereof.

7. The method according to any of the preceding claims, wherein a first gas recirculation zone (115) is generated in the first furnace region (11) and a second gas recirculation zone (135) is generated in the second furnace region (12), wherein the at least one injection gas (3, 7, 8) or the part thereof which is injected into the first (11) and/or second (12) furnace region in the injection directions is injected into the respective furnace region (11, 12) to support a recirculation in the first (115) and/or second (135) gas recirculation zone.

8. The method according to claim 7, wherein the injection is performed in an injection speed, the injection speed being adapted to a motion speed of recirculated gas in the first (115) and/or second (135) gas recirculation zone, respectively, and/or wherein the injection speed of the at least one injection gas (3, 7, 8) differs by less than 20%, 15%, 10% or less than 5% from an injection velocity of the at least first part (2) of the sour gas (1) supplied to the combustion arrangement (13).

9. The method according to any of the preceding claims, wherein the injection is performed starting from one or more injection positions (17, 18) situated in a radial region corresponding to a radial region covered by the choking ring (14) and/or using a number of injection devices (16).

10. The method according to claim 9, wherein the one or more injection position comprise 2, 3, 4, 5, 6, 7, 8, 9, 10 or up to 50 injection positions, particularly wherein the injection positions are spaced from one another in a circumferential direction and or in an axial direction and/or in a radial direction with respect to the furnace, and/or wherein a number of injection devices (16) is in a range from 3 to 8, 10 or 20 or a higher number and/or wherein the injection devices (16) are distributed over the circumference of a wall of the second furnace region (12).

11. The method according any of the preceding claims, wherein the at least one injection gas (3, 7, 8) comprises at least one recycling gas (7, 8) recovered from upstream and/or downstream (30) of the furnace (10) being injected into the first furnace region (11).

12. The method according to claim 11, wherein a first (7) of the at least one recycling gas (7, 8) is routed to a first injection position (17) and a second (8) of the at least one recycling gas (7, 8) is routed to a second injection position (18), wherein the first recycling gas (7) has a higher oxygen content than the second recycling gas (8) and the first injection position (17) is further distanced from the outer wall of the furnace (10) than the second injection position (18).

13. The method according to any of the preceding claims, wherein the furnace (10) is used to partly oxidize hydrogen sulphide in the first furnace region (11) to form sulphur dioxide, and wherein at least a part of said sulphur dioxide and hydrogen sulphide not oxidized in the first furnace region are reacted to form elementary sulphur.

14. An apparatus (100, 110) for treating a sour gas (1), including a furnace (10) comprising a first furnace region (11), a second furnace region (12), a combustion arrangement (13) at a first terminal zone (111) of the first furnace region (11), a choking ring (14) arranged between a second terminal zone (112) of the first furnace region (11) and a first terminal zone (121) of the second furnace region (12), and a furnace outlet (15) arranged at a second terminal zone (121) of the second furnace region (12), wherein the apparatus (100, 110) is adapted to introduce the sour gas (1) into the furnace (10) and wherein the apparatus (100, 110) is adapted to supply at least a first part (2) of the sour gas (1) to the combustion arrangement (13) and to inject at least one injection gas (3, 7, 8) into the first (11) and/or the second (12) furnace region, **characterized in that** the apparatus (100, 110) is adapted to inject the at least one injection gas or a part thereof into the first (11) and/or second (12) furnace region in at least one injection direction comprising a directional component which is opposite or anti-parallel with regard to a direction parallel to a longitudinal axis (105) of the furnace (10) from the combustion arrangement (13) towards the furnace outlet (15).

15. The apparatus (100, 110) according to claim 14, wherein the apparatus (100, 110) is adapted to perform a method according to any of claims 1 to 13.
